# EUROPEAN PATENT APPLICATION

(11) **EP 1 143 447 A2**
(43) Date of publication of application: **10.10.2001**
(21) Application number: 01302728.9
(22) Date of filing: 23.03.2001
(51) Int. Cl.: G11B 27/031, G11B 27/00, G11B 27/11, G11B 31/00

(54) **AV information processing unit and information recording medium, in which an AV information processing program is recorded so as to be capable of being read by computer**

(30) Priority: 28.03.2000 JP 2000092992
(71) Applicant: Pioneer Corporation, Tokyo-to (JP)
(72) Inventor: Horiuchi, Naoaki, Tsurugashima-shi, Saitama-ken (JP); Gayama, Shinichi, Tsurugashima-shi, Saitama-ken (JP)
(74) Representative: Haley, Stephen

(57) **Abstract**

The AV information processing unit comprises: an AV information recording unit for accumulating the AV information including the audio information or the like; plural agents for performing partial information processing, which is a part of the information processing requested to be performed from the outside, by using the accumulated AV information and performing the partial information, which are different from each other, separately and respectively; and a scenario selection and performing agent for shifting at least a portion of utility information from the agent, which performed one partial information processing, to the agent for performing other partial information processing so that at least a portion of the utility information used for the one partial information processing can be used in the other partial information processing.

## Description

The present invention relates to a technical field of an AV information processing unit for processing AV information including at least any one of audio information including voice information and music information, video information including moving image information and static image information, and data information such as program data, character data or the like in response to at least any one of the audio information and the video information (hereinafter, simply referred to as AV information), and an information recording medium in which an AV information processing program are recorded so as to be capable of being read by a computer. More specifically, the present invention relates to a technical filed of an AV information processing unit for performing processing in response to a processing requirement from a user, and an information recording medium in which an AV information processing program are recorded so as to be capable of being read by computer.

For example, in the case that a user reproduces desired AV information from an AV information processing unit including a plurality of an information recording medium such as a hard disk or the like in which a plurality of AV information is recorded in advance, to listen or see it, and the user intends to record only desired partial AV information from the AV information, which are listened or seen, in other information recording medium such as a MD (Mini Disc) or the like, a conventional AV information processing unit is configured in such a manner that the user selects and designates the partial AV information to be recorded one by one after reproduction of all AV information was completed and necessary recording has not been taken place not until the user inputted the designated content in the AV information processing unit.

However, in the above described conventional AV information processing unit, designation of the partial AV information, confirmation of the start of the recording operation and cost for copy right in the case that the cost is needed are required with respect to each of the partial AV information that the user desired to record. As a result, this involves a problem such that this AV information processing unit is not user-friendly, since there is much processing to be required for recording.

Further, the above problem becomes more evident as the AV information that the user desires to record increases in quality.

The present invention has been made taking the foregoing problem into consideration, an object of the invention is to provide an AV information processing unit such that a user who is not used to treat an AV information processing unit is capable of easily and quickly performing the necessary information processing, even in the case that the user should reproduce or record great varieties and quantity of the AV information, in other words, the user-friendly AV information processing unit such that a user can perform necessary information processing and an information recording medium in which a program for processing the AV information is recorded so as to be capable of being read by a computer.

In order to solve the above problems, a first aspect of the present invention provides an AV information accumulating device for accumulating AV information, which include any one of audio information, video information and data information associated with at least any one of the audio information and the video information; plural performing devices such as a reproduction agent for performing partial information processing, which is a part of information processing required to be performed from the outside, by using the accumulated AV information and performing each of the partial information processings, which are different each other, separately; and a shifting device such as a scenario selection and performing agent for shifting at least a portion of utility information from the performing device, which has performed one partial information processing, to the performing device for performing other partial information processing, so that at least a portion of the utility information, which has been used to perform the one partial information processing, can be used to perform the other partial information processing.

Accordingly, since other partial information processing are performed by shifting at least a portion of the utility information used for one partial information processing, there is no need to provide all information necessary for newly performing the other partial information processing from the outside. Thus, it becomes possible to simplify treating of the AV information processing unit and to perform necessary processing user-friendly as the AV information processing unit.

In order to solve the above problems, a second aspect of the present invention provides an AV information processing unit according to the first aspect, wherein each performing device performs the associated partial information processing, respectively, in accordance with a processing procedure set in advance.

Therefore, even in the case of performing a plurality of partial information processing in accordance with a processing procedure set in advance, it becomes possible to simplify treating of the AV information processing unit and to perform necessary processing user-friendly as the AV information processing unit.

In order to solve the above problems, a third aspect of the present invention provides an AV information processing unit according to the first or second aspect, further comprising an outputting device such as a voice synthesis agent for outputting an performing result from the entire information processing obtained by performing each partial information processing by each performing device to an exterior by using at least any one of a voice and an image.

Accordingly, since the AV information processing unit outputs the performing result by using at least any one of a voice and an image, the performing result is capable of being provided in a form such that the user can easily identify it.

In order to solve the above problems, a fourth aspect of the present invention provides an AV information processing unit according to any one of the first to third aspects, further comprising a receiving device such as a microphone for receiving the information processing required from the exterior by the voice.

Therefore, the user can require easily the performing of the information processing by using the voice.

In order to solve the above problems, a fifth aspect of the present invention provides an AV information processing unit according to any one of the first to fourth aspects, further comprising an obtaining device for obtaining the AV information from the exterior and accumulating it in the AV information accumulating device; wherein each performing device performs the associated partial information processing by using the AV information.

Accordingly, the user can perform the necessary information processing by using broader range of the AV information.

In order to solve the above problems, a sixth aspect of the present invention provides an information recording medium, in which an AV information processing program is recorded so as to be capable of being read by a computer, for making the computer function as: an AV information accumulating device for accumulating the AV information, which includes any one of audio information, video information and data information associated with at least any one of the audio information and the video information; plural performing devices for performing partial information processing, which is a part of information processing required to be performed from the outside, by using the accumulated AV information and performing each of the partial information processings, which are different each other, separately; and a shifting device for shifting at least a portion of utility information from the performing device, which has performed one partial information processing, to the performing device for performing other partial information processing, so that at least a portion of the utility information, which has been used to perform the one partial information processing, can be used to perform the other partial information processing.

Accordingly, since the information recording medium makes the computer function perform other partial information processing by shifting and using at least a portion of the utility information, which has been used to perform the one partial information processing, there is no need to provide all information necessary for newly performing the other partial information processing from the outside. Thus, it becomes possible to simplify treating of the AV information processing unit and to perform necessary processing user-friendly as the AV information processing unit.

In order to solve the above problems, a seventh aspect of the present invention provides an information recording medium according to the sixth aspect, in which the AV information processing program is recorded so as to be capable of being read by a computer, for making the computer functioning as each performing device function such that it performs the associated partial information processing, respectively, in accordance with a processing procedure set in advance.

Therefore, even in the case of performing a plurality of partial information processings in accordance with a processing procedure set in advance, it becomes possible to simplify treating of the AV information processing unit and to perform necessary processing user-friendly as the AV information processing unit.

In order to solve the above problems, an eighth aspect of the present invention provides an information recording medium according to the sixth or seventh aspect, in which the AV information processing program is recorded so as to be capable of being read by a computer, for further making the computer as an outputting device for outputting an performing result from the entire information processing, which is obtained by performing each partial information processing by each performing device, to an exterior by using at least any one of voice or an image. Accordingly, since the information recording medium makes the computer function output the performing result by using at least any one of the voice and the image, the performing result is capable of being provided in a form such that the user can easily identify it.

In order to solve the above problems, a ninth aspect of the present invention provides an information recording medium according to any one of the sixth to eighth aspects, in which the AV information processing program is recorded so as to be capable of being read by a computer, for further making the computer as a receiving device for receiving the information processing, which is required from the exterior by the voice.

Therefore, the user is capable of easily requiring the performing of the information processing by using the voice.

In order to solve the above problems, a tenth aspect of the present invention provides an information recording medium according to any one of the sixth to ninth aspects, in which the AV information processing program is recorded so as to be capable of being read by a computer, for further making the computer as an obtaining device for obtaining the AV information form the exterior and accumulating it in the AV information accumulating device and making the computer functioning as each performing device function such that it performs the associated partial information processing by using the AV information.

Accordingly, the user is capable of performing the necessary information processing by using more wide range of the AV information.
FIG. 1 is a block diagram showing a schematic constitution of an AV information processing unit;
FIG. 2 is a diagram showing a constitution of a scenario selection and performing agent;
FIGS. 3A to 3D are tables showing a content of each of scenario data; and FIG. 3A is a table showing a content of reproduction scenario data, FIG. 3B is a table showing a content of recording scenario data, FIG. 3C is a table showing a content of download scenario data and FIG. 3D is a table showing a content of editorial scenario data.
FIG. 4 is a flow chart showing a flow of each processing constituting the AV information processing schematically and in a module;
FIG. 5 is a flow chart showing reproduction processing and recording processing of an embodiment; and
FIG. 6 is a diagram conceptually explaining the reproduction processing and the recording processing of the embodiment.

Preferred embodiments of the present invention will be explained below with reference to the drawings.

Alternatively, according to an embodiment to be explained below, necessary AV information can be reproduced from an AV information recording unit such as a hard disk or the like, in which the AV information is recorded. Simultaneously, in the present embodiment, the present invention is employed for an AV information processing unit, which is at lease capable of designating other necessary AV information to an information recording medium and recording the other necessary AV information in this information recording medium.

### (1) Embodiment of schematic constitution and operation of AV information processing unit

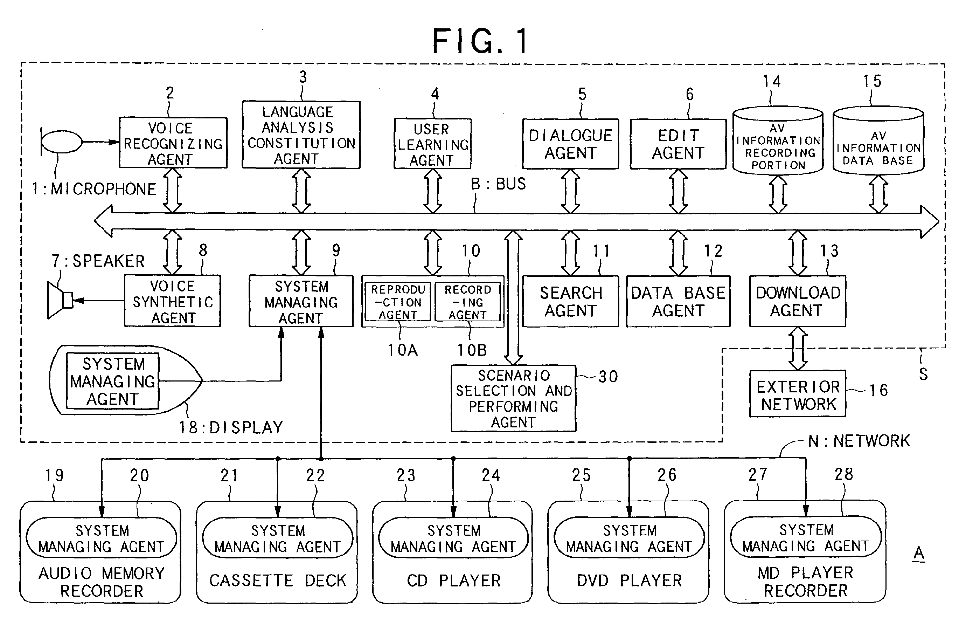

At first, a schematic constitution of the AV information processing unit according to the present embodiment will be explained with reference to FIG. 1. FIG. 1 is a block diagram showing a schematic constitution of the AV information processing unit.

As shown in FIG. 1, an AV information processing unit A according to the present embodiment itself is set in one house. Specifically, the AV information processing unit A is comprised of an AV information accumulation unit S, an audio memory recorder 19 capable of recording or reproducing the AV information with respect to an audio memory such as a semiconductor (solid matter) memory or an optical disk (specifically, a CD-R (Compact Disc-Recordable), a DVD-R (DVD-Recordable), a DVD-RAM (DVD-Random Access Memory) or the like) or the like, a cassette deck 21, a CD player 23, a DVD player 25 and a MD (Mini Disc) player recorder 27. Further, the audio memory recorder 19 or the like and the AV information accumulation unit S are connected through an net work N such as a domestic LAN (Local Area Network) or the like so that information can be given and received mutually.

On the other hand, the AV information accumulation unit S is comprised of an voice recognizing agent 2, to which a microphone 1 as a reception device is connected, a language analysis constitution agent 3, a user learning agent 4, a dialogue agent 5, an edit agent 6, a voice synthetic agent 8 to which a speaker 7 is connected as an outputting device, a system managing agent 9, an AV control agent 10 including a reproduction agent 10A as a performing device and a recording agent 10B as a performing device, a search agent 11, a data base agent 12, a download agent 13 as an obtaining device, a display 18 including a system managing agent 17, an AV information data base 15 as an AV information recording portion 14 composed of a hard disk and its driver in practice as an AV information accumulating device and a scenario selection and performing agent 30 as a shifting device. Further, respective agents, the AV information recording portion 14 and the AV information data base 15 are connected so that they can give and receive necessary information mutually through a bus B.

Alternatively, the download agent 13 is connected so that it can give and receive necessary information to and from an exterior network 16, for example, an Internet or the like.

On the other hand, each of the above audio memory recorder 19, the cassette deck 21, the CD player 23, the DVD player 25 and the DVD player recorder 27 includes system managing agents 20, 22, 24, 26 and 28, which are connected to an network N and which control the operation of each device.

In this case, the system managing agent 9 and respective managing agents 17, 20, 22, 24, 26 and 28 in the AV information accumulating unit S are connected respectively so that they can give and receive the information via the network N or the like.

Here, each of the above descried agents comprises a module (a program module) having a self-discipline, association and learning functions, by which each agent determines what should be processed and what should be outputted in accordance with a required content by themselves. In other words, this module enables the processing to be positively performed in accordance with the required content by an own judging criterion. In this case, respective agents are specifically implemented by a CPU or the like as a computer for implementing the processing on the basis of a program associated with functions of respective agents.

Alternatively, since the respective agents perform the processing given independently, respectively, for example, even in the case that any one of agents becomes inoperative due to some causes, other agents are capable of continuing other processing except for the processing related to the inoperative agent.

These agents are described in detail, for example, in "From Object Orientation to Agent Orientation", by Shinnichi Hoida and Akihiko Osuga, Soft Bank Kabushiki Kaisha, issued on May, 1998 or the like.

Next, each operation thereof will be explained.

At first, the audio memory recorder 19 records the AV information to be outputted from the AV information accumulation unit S via the network N under control of the system managing agent 20 in the specified information recording medium such as the above semiconductor memory or the like. Simultaneously, the audio memory recorder 19 outputs the AV information recorded in the information recording medium to the AV information accumulation unit S via the network N.

On the other hand, the cassette deck 21 records the AV information to be recorded, which is to be outputted from the AV information accumulation unit S via the network N under control of the system managing agent 22 in the fitted cassette tape. Simultaneously, the cassette deck 21 outputs the AV information recorded in the cassette tape to the AV information accumulation unit S via the network N.

Alternatively, the CD player 23 outputs the AV information recorded in the fitted CD to the AV information accumulation unit S via the network N under control of the system managing agent 24.

Furthermore, the DVD player 25 outputs the AV information recorded in the fitted DVD to the AV information accumulation unit S via the network N under control of the system managing agent 26.

Alternatively, the MD player recorder 27 records the AV information to be recorded, which is outputted from the AV information accumulation unit S via the network N in the fitted MD under control of the system managing agent 28. Simultaneously, the MD player recorder 27 outputs the AV information recorded in the MD to the AV information accumulation unit S via the network N.

Working with these connected devices, the AV information accumulation unit S outputs the necessary AV information to an interior of a house via the speaker 7 as described below in response to the request inputted from the user by using voice. Simultaneously, the AV information accumulation unit S performs the processing such as recording other AV information in any information recording medium.

Next, a general operation of respective agents or the like included in the AV information accumulation unit S will be explained with reference to FIG. 1.

At first, wide variety of AV information are accumulated in the AV information recording portion 14 so that they are capable of being identified and read mutually.

Next, attributive information indicating each of the AV information recorded in the AV information recording portion 14 are recorded in the AV information data base 15 so that they can be distinguished mutually. More specifically, the attributive information comprises identification information for identifying a name of the recorded AV information, a category to which the recorded AV information belongs, a required time for reproduction and the recorded information recording medium or related information such as information that this recorded AV information is used as a theme song of a movie or the like.

On the other hand, the voice recognizing agent 2 is an agent having a function referred to as a voice recognizing engine to perform comparatively low intellectual processing. Specifically, recognizing a content of a voice signal associated with a voice of the user (a voice indicating a response or the like in accordance with the processing to be performed by using the AV information processing unit or the voice outputted from the speaker 7) to be inputted from the microphone 1, the voice recognizing agent 2 outputs content information indicating the identified content to the language analysis constitution agent 3 via the bus B.

Then, the language analysis constitution agent 3 is an agent for performing high intellectual processing. Specifically, the language analysis constitution agent 3 analyzes the received content information and translates it into an intermediate language capable of being identified by other agents except for the voice recognizing agent 2 and the voice synthetic agent 8 to output it to the bus B.

In addition to the above, receiving output information associated with a response sound or audio information to be outputted via the speaker 7 from the bus B as the intermediate language, the language analysis constitution agent 3 converts this received output information into a voice signal or audio information capable of being synthesized in the voice synthetic agent 8 to output it to the voice synthetic agent 8.

Alternatively, the voice synthetic agent 8 is an agent having a function referred to as a voice synthetic engine to perform comparatively low intellectual processing. Specifically, the voice synthetic agent 8 synthesizes the voice or the audio information to be outputted in practice by using the converted voice signal or the audio information to output the synthesized voice or audio information to the user in the house via the speaker 7.

Next, the dialogue agent 5 is an agent for performing high intellectual processing. Specifically, the dialogue agent 5 performs processing for controlling a relation between the above described voice recognition processing and the voice synthetic processing via the bus B (processing for controlling a relation between the above described voice identification via the bus B comprises processing for controlling a relation between a timing to perform the voice identification processing in the language analysis constitution agent 3 and a timing to perform the voice synthetic processing in the voice synthetic agent 8 or processing for designating a content of the voice synthesis or the like) and processing for analyzing and implementing the above inputted content information or the like.

Furthermore, the user learning agent 4 is an agent for performing high intellectual processing including what is called learning function. Specifically, receiving the above voice-identified content information via the bus B, the user learning agent 4 sectionalizes the received content information for each user to store them as a usage record. Then, referring to the past usage record for each user, the user learning agent 4 analyzes and accumulates a habit or a taste of the user. Simultaneously, the user learning agent 4 stores a request from the user who has not completed the processing yet at this time.

Alternatively, the edit agent 6 is an agent for performing middle level intellectual processing. Specifically, the edit agent 6 receives necessary information from the AV information data base 15 via the data base agent 12 in response to a request from the user and performs the processing for editing a list of the AV information capable of being reproduced or the like.

Furthermore, the search agent 11 is an agent for performing the middle level intellectual processing. Specifically, the search agent 11 searches in the AV information data base 15 via the data base agent 12 in response to a request from the user or performs the processing for searching in the exterior network 16 via the download agent 13.

In this case, the database agent 12 is an agent for performing comparatively low intellectual processing. Specifically, despite the user requests or not, the database agent 12 updates a content of the AV information database 15 and the AV information recording portion 14 by using the AV information received from the exterior network 16 via the download agent 13. Simultaneously, the database agent 12 performs the processing for organizing and managing the information in the AV information database 15 or the like other than searching.

Furthermore, the download agent 13 is an agent for performing middle level intellectual processing. Specifically, the download agent 13 newly receives the AV information from the exterior network 16 if necessary. Then, the download agent 13 mainly output the received AV information to the database agent 12.

On the other hand, the AV control agent 10 is an agent for performing middle level intellectual processing. Specifically, mainly giving and receiving the information to and from the system managing agent 9, the AV control agent 10 the AV control agent 10 performs the reproduction control such as controlling the reproduction order of the AV information and the recording control such as selecting of the information recording medium in which the AV information should be recorded.

In this time, the reproduction control for the AV information to be reproduced is mainly performed in the reproduction agent 10A. On the other hand, the recording control for the AV information to be reproduced is mainly performed in the recording agent 10B.

Alternatively, the scenario selection and performing agent 30 is an agent for performing middle level intellectual processing. Specifically, the scenario selection and performing agent 30 globally controls the foregoing reproduction agent 10A or the recording agent 10B by using the scenario data in associated with the scenario set in advance in such a manner that the reproduction control or the recording control of the AV information or the like are performed in a procedure described in the scenario.

Finally, the system managing agent 9 is an agent for performing comparatively low intellectual. Specifically, the system managing agent 9 gives and receives the information between the system managing agent 17 in the display 18 and each system managing agent connected to the network N. Simultaneously, the system managing agent 9 performs status managing processing of each device such as the audio memory recorder 19 or the like connected to the AV information accumulation unit S and processing like an interface.

In parallel with this, the system managing agent 9 manages a signal to be inputted from the microphone 1 and a signal to be outputted to the speaker 7.

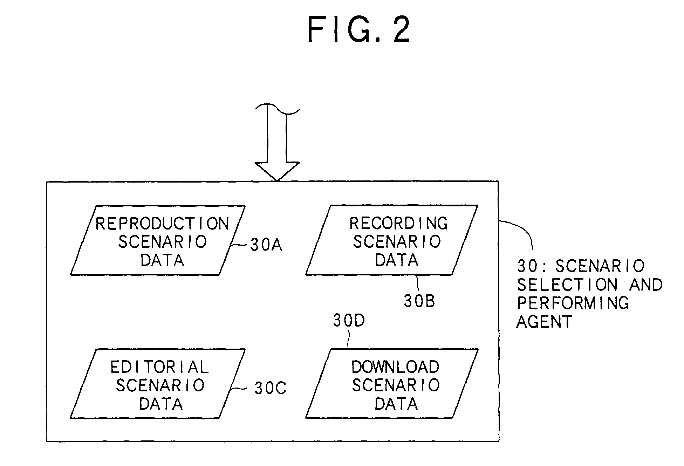

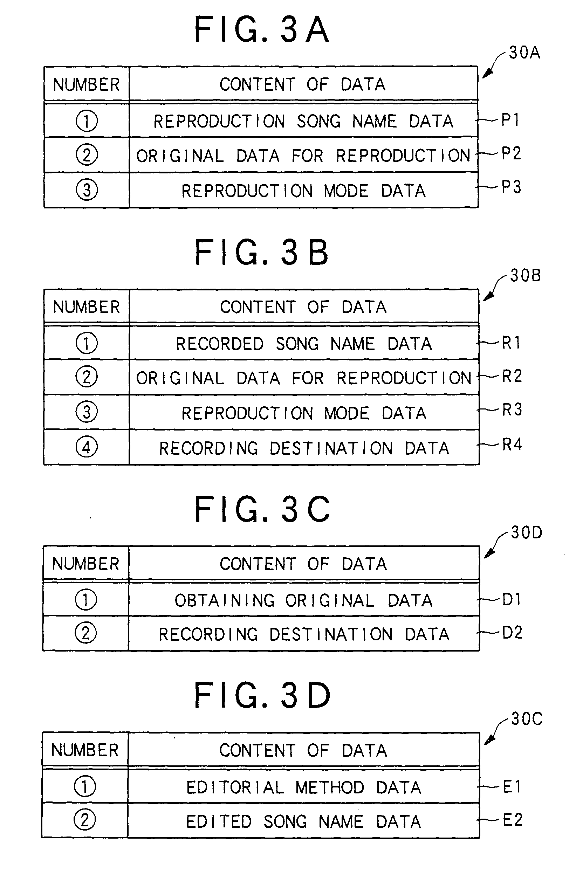

Next, the constitution and the operation of the foregoing scenario selection and performing agent 30 will be specifically explained with reference to FIGS. 2 and 3.

At first, as shown in FIG. 2, within the scenario selection and performing agent 30, scenario data as data, in which various processings to be performed in the AV information processing unit A are systemized, is stored in advance.

FIG. 2 shows a state that reproduction scenario data 30A, recording scenario data 30B, editorial scenario data 30C and download scenario data 30D are stored. In the reproduction scenario data 30A, extracting and reproduction processing from the AV information recording portion 14 of the AV information to be performed in the reproduction agent 10A are systemized. In the recording scenario data 30B, the recording processing for recording the AV information to be performed in the recording agent 10B in the information recording medium such as the MD or the like is systemized. In the editorial scenario data 30C, the editorial processing of the AV information to be performed by the edit agent 6 (specifically, the editorial processing for combining one AV information accumulated in the AV information recording portion 14 and the AV information obtained by the download agent 13 and forming one AV information or the like) is systemized. In the download scenario data 30D, the download processing from the exterior network 16 of the AV information to be performed in the download agent 13 is systemized.

In this case, as shown in FIG. 3A, as each scenario data, the reproduction scenario data 30A specifically includes reproduction song name data P1 showing a name of the AV information to be reproduced (one song in FIG. 3), original data for reproduction P2 showing an information recording medium, in which the AV information to be reproduced is stored (specifically, a CD or the like, which is filled in the AV information recording portion 14 or the CD player 23) and reproduction mode data P3 showing a mode of its reproduction.

Alternatively, as shown in FIG. 3B, the recording scenario data 30B includes recorded song name data R1 showing a name of the AV information to be recorded, original data for reproduction R2 showing an information recording medium in which the AV information to be reproduced is stored, reproduction mode data R3 showing a mode of its reproduction and recording destination data R4 showing a recording destination to which the AV information is recorded.

Further, as shown in FIG. 3D, the editorial scenario data 30C includes editorial method data E1 showing an editorial method of the AV information to be edited and edited song name data E2 showing the AV information to be edited.

At the last, as shown in FIG. 3C, the download scenario data 30D includes obtaining original data D1 showing a download origin for downloading the AV information and the recording destination data D2 showing a recording destination to which the obtained AV information is recorded (specifically, the AV information recording portion 14 and the AV information data base 15 or the like).

Here, in each data in these respective scenario data, there is one case that the data inputted by the user is stored as the reproduction scenario data 30A or the like and there is another case that the data used in other processing is taken over and is stored as the case to be described later that the processing shifts from the reproduction processing to the recording processing.

### (2) Embodiment of AV information processing

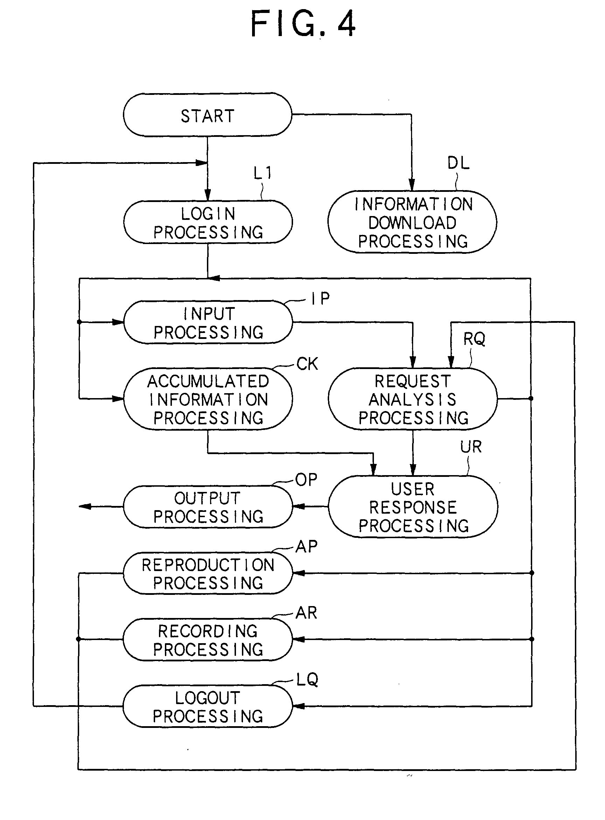

Next, the AV information processing according to the present invention to be performed in the AV information processing unit A including each agent having the above described constitution and the operation will be explained below with reference to FIGS. 4 to 6.

At first, a whole constitution of the AV information processing will be explained with reference to FIG. 4. Here, FIG. 4 shows each processing constituting the AV information processing schematically and in a module. At the same time, FIG. 4 is a flow chart showing a relation between the respective processing and a flow of the information.

As shown in FIG. 4, if the AV information processing according to the present invention is performed, at first, login processing LI is performed.

This login processing LI is mainly performed in the system managing agent 9 and the user learning agent 4. Specifically, by inputting the voice to the microphone 1, the identification processing to know who is the user and processing for reading the usage record for each user in accordance with the identification processing or the like are performed. Then, a result from the identification processing is outputted to the input processing IP and accumulated information processing CK. Alternatively, even while one user is using the AV information processing unit A, the login processing LI is performed every when the voice is inputted from the one user.

Next, the input processing IP is mainly implemented in the system managing agent 9, the voice recognizing agent 2 and the language analysis constitution agent 3. Specifically, the input processing IP recognizes a content of a processing request (a processing request including a content of the AV information processing to be performed by the AV processing unit A), which is inputted by the user with the voice via the microphone 1. Then, the input processing IP outputs its result to a request analysis processing RQ.

The request analysis processing RQ serves as the backbone for the AV information processing according to the present embodiment. This request analysis processing RQ is performed mainly by the user learning agent 4, the dialogue agent 5, the search agent 11, the data base agent 12, the system managing agent 9 and the AV control agent 10. Specifically, the request analysis processing RQ performs various processings associated with the processing request inputted from the user and makes a reproduction processing AP reproduce or a recording processing AR perform recording of the AV information or reproduction of the AV information, which are necessary for performing the processing.

Alternatively, the request analysis processing RQ forms a closing loop between itself and the input processing IP to perform the AV information processing desired by the user in the form of a dialogue with the user.

Furthermore, the request analysis processing RQ outputs the information indicating a content to be outputted to a user response processing UR when necessity to output a voice to the user in the above dialogue with the user arises. In this case, if the AV processing unit A does not have the information associated with the processing request inputted by the user, the request analysis processing RQ outputs the information that the information related to the processing request is outputted in a voice to the user response processing UR or outputs the information that the information indicating AV processing unit A does not have the information associated with the processing request is outputted in a voice to the user response processing UR.

Furthermore, the request analysis processing RQ outputs terminating information that the input of the processing request should be terminated to a logout processing LO, when it becomes clear that the user terminates the input of the processing request with respect to the AV information processing unit A from the above dialogue with the user.

On the other hand, after receiving the result of the identification processing, which is outputted from a login processing LI, the accumulated information processing CK is mainly performed in the user learning agent 4, the dialogue agent 5, the search agent 11 and the data base agent 12. Specifically, the accumulated information processing CK confirms whether or not there is a processing request which is not completed in the processing request after the login processing LI performed last time. Then, in the case that there is such a processing request and the AV information processing unit A has the AV information capable of completing this processing request, the accumulated information processing CK outputs the information that this processing request can be completed to the user response processing UR.

Thus, the user response processing UR forms the information that the voice output outputted from the request analysis processing RQ is performed or forms a response sentence to be used for a response to the user associated with the information outputted from the accumulated information processing CK in accordance with the user's character. Then, the user response processing UR outputs the response information to the output processing OP. In this case, the user response processing UR is mainly performed in the user learning agent 4 and the dialogue agent 5.

Next, the output processing OP is mainly performed in the voice synthetic agent 8, the language analysis constitution agent 3 and the system managing agent 9. Specifically, the output processing OP converts the response information to be outputted from the user response processing UR to a voice to be outputted in practice, then, outputs the voice to the user via the speaker 17. At the same time, in the case that there is information to be outputted by an image, the output processing OP indicates a content of the image on the display 18 via the system managing agents 9 and 17.

On one hand, the reproduction processing AP is mainly connected to the AV information accumulation unit S via the network N. Simultaneously, the reproduction processing AP is performed in the system managing agent and the reproduction agent 10A of respective devices having the function to reproduce the AV information. Specifically, the reproduction processing AP entirely performs reproduction of the AV information on the basis of the instructing information from the request analysis processing RQ and feeds back the reproduced AV information and the controlling information that the reproduction is terminated or the like to the request analysis processing RQ.

On the other hand, the recording processing AR is mainly connected to the AV information accumulation unit S via the network N. Simultaneously, the recording processing AR is performed in respective devices having a function to record the AV information and the system managing agent and the recording agent 10B of respective devices having the function to reproduce the AV information. Specifically, the recording processing AR entirely performs reproduction of the AV information and recording of the reproduced AV information on the basis of the instructing information from the request analysis processing RQ and feeds back the controlling information that the recording is terminated or the like to the request analysis processing RQ.

Alternatively, a logout processing LO is mainly performed in all system managing agents and the user learning agent 4. Specifically, the logout processing LO performs the reset processing and the termination processing of the AV information processing unit A itself and performs the reset processing and the termination processing of respective devices connected each other on the basis of the termination information from the request analysis processing RQ. Simultaneously, in the case that the AV information processing that is not completed in this last AV information processing remains, after storing the content that the AV information processing still remains, the logout processing LO terminates the entire AV information processing according to the present embodiment. In the case that a power source of the AV information processing unit A itself is not turned off after termination of the logout processing LO, it is necessary to wait a next login processing LI.

At last, an information download processing DL is performed full-time (regardless of whether the login processing LI is performed and the AV information processing starts or not) with being independent from the above described respective processing. The information download processing DL is mainly performed in the user learning agent 4 and the download agent 13. Specifically, the AV information for completing the AV information processing, which was not completed, is received from the exterior network 16, and it is recorded in the AV information recording portion 14. Simultaneously, the AV information database 15 is updated.

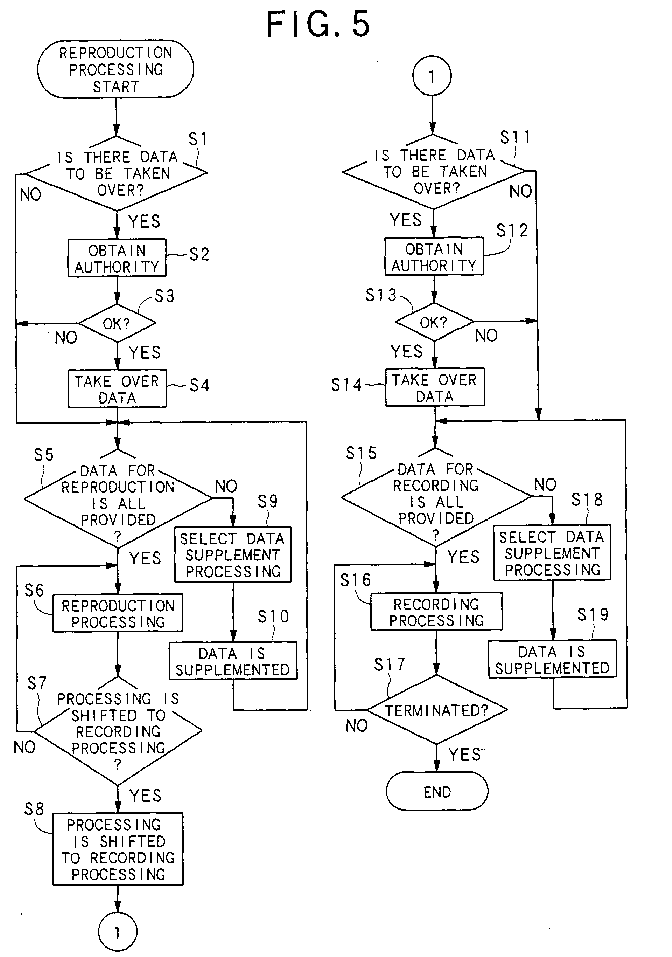

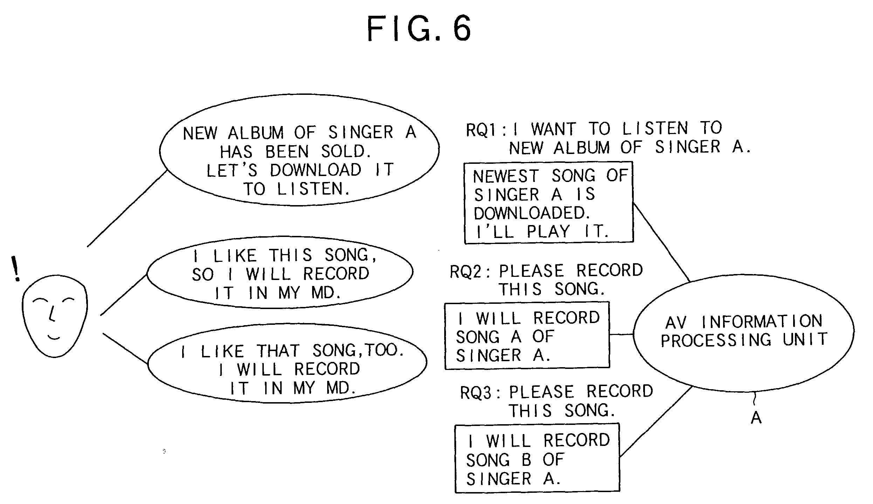

Next, an embodiment of the AV information processing according to the present invention will be explained with reference to FIGS. 3, 5 and 6. Here, FIG. 5 is a flow chart showing the AV information processing according to the present embodiment and FIG. 6 is a diagram conceptually explaining the AV information processing according to the present embodiment.

Alternatively, according to the embodiment to be described below, the present invention is employed in the case that the reproduction processing on the basis of the reproduction scenario data 30A for a song as the AV information desired by the user, and the recording processing on the basis of the recording scenario data 30B to record the song in the MD are preformed.

As shown in FIG. 5, in the AV information processing according to the embodiment, at first, it is determined in the scenario selection and performing agent 30 whether or not there is the data to be taken over from other AV information processing which has been performed so far (the editorial processing or the like on the basis of the editorial scenario data 30C) to the reproduction processing to be performed hereafter, i.e., there is the data which also can be used for the reproduction processing in the data within the editorial scenario data 30C (step S1).

Then, if there is no data to be taken over (step S1; NO), the processing directly shifts to step S5. On the other hand, if there is data to be taken over (step S1; YES), the voice is synthesized and outputted by the dialogue agent 5 and the voice synthetic agent 8 or the like in order to obtain the authorization in regard to the taking-over from the user, then, the authorization is provided from the user (step S2).

Next, it is confirmed whether or not the answer by the voice from the user to authorize taking over the data is obtained by the scenario selection and performing agent 30 (step S3). When the authorization is not provided (step S3; NO), the data is not taken over and the processing directly shifts to the step S5. On the other hand, if the authorization is provided (step S3; YES), the authorized data is taken over by the scenario selection and performing agent 30 (step S4).

In this step S4, for example, when the editorial processing of the AV information has been performed till then, the processing such that the data, which is also capable of being used for the reproduction processing here after, in the editorial scenario data 30C associated with the editorial processing is stored in the scenario selection and performing agent 30 as the reproduction scenario data 30A is performed.

If the data is completely taken over, then, the scenario selection and performing agent 30 confirms whether or not all the data necessary for the reproduction processing (namely, the reproduction scenario data 30A) are provided (step S5). If they are not totally provided (step S5; NO), other agent (for example, in the case that there is need to obtain the insufficient data from the user, this other agent corresponds to the dialogue agent 5 and the voice synthetic agent 8 or the like and in the case that there is need to obtain the insufficient data from the exterior network 16, this other agent corresponds to the download agent 13) is selected (step S9) to obtain the insufficient data (step S10). Then, the processing returns to the step S5 again.

On the other hand, if the contents of the reproduction scenario data 30A necessary for the reproduction processing are completely provided (step S5; YES), then, by using the reproduction scenario data 30A, the reproduction processing of the necessary song (also including output to the user) is performed in practice (step S6).

When the reproduction processing is commenced, then, the scenario selection and performing agent 30 confirms whether or not the processing to record the reproduced song in the MD is required by the user (step 7). If there is no request (step 7; NO), the processing returns to the step S6 to continue the reproduction processing. On the other hand, if there is request for recording (step 7; YES), then, the processing shifts to the recording processing by the use of the recording scenario data 30B (step S8).

In the recording processing, at first, the scenario selection and performing agent 30 confirms whether or not there is data to be taken over to the recording processing after the reproduction processing, which has been performed till then, i.e., there is the data which also can be used for the recording processing in the data within the reproduction scenario data 30A used for the reproduction processing (step S11).

If there is no data to be taken over (step S11; NO), the processing directly shifts to the step S15. However, according to the embodiment, the reproduction song name data P1 in the data within the reproduction scenario data 30A used for the reproduction processing also can be used as the recorded song name data R1 as it is. Further, the original data for reproduction P2 and the reproduction mode data P3 also can be used as the original data for reproduction R2 and the reproduction mode data R3 in the recording scenario data 30B as they are, respectively (step S11; YES).

Therefore, the voice is synthesized and outputted by the dialogue agent 5 and the voice synthetic agent 8 or the like in order to obtain the authorization from the user, then, the authorization is provided from the user (step S12).

Next, it is confirmed whether or not the answer by the voice from the user to authorize taking over the data is obtained by the scenario selection and performing agent 30 (step S13). When the authorization is not provided (step S13; NO), the data is not taken over and the processing directly shifts to the step S15. On the other hand, if the authorization is provided (step S13; YES), the authorized data (the reproduction song name data P1, the original data for reproduction P2 and the reproduction mode data P3) are taken over by the scenario selection and performing agent 30 (step S14).

In this step S14, the processing such that the reproduction song name data P1, the original data for reproduction P2 and the reproduction mode data P3 are stored in the scenario selection and performing agent 30 as the recorded song name data R1, the original data for reproduction R2 and the reproduction mode data R3, respectively, is performed.

If the data is completely taken over, then, the scenario selection and performing agent 30 confirms whether or not all the data necessary for the recording processing (namely, the recording scenario data 30B) are provided (step S15).

In this case, in the embodiment, since the recording destination data R4 in the recording scenario data 30B (in the case of the embodiment, the recording destination data R4 showing a recording destination is the MD) is not obtained yet (step S15; NO), then, selecting the dialogue agent 5 and the voice synthetic agent 8 or the like in order to obtain the lacking recording destination data R4 (step S18), the lacking recording destination data R4 is obtained as the voice answer or the like from the user (step S19) and the processing returns to the step S15 again.

Then, since the necessary recording scenario data 30B are all provided (step S15; YES) in this determination in the step S15, then, by using the recording scenario data 30B, the processing for recording the reproduced song to the MD is performed by the scenario selection and performing agent 30 and the system managing agent 28 or the like (step S16).

Then, the recording processing is commenced, the scenario selection and performing agent 30 confirms whether or not an instruction to terminate the recording processing is given by the user (step S17). If there is no such an instruction (step S17; NO), the processing returns to the step S16 to continue the recording processing. On the other hand, if there is such an instruction (step S17; YES), a series of reproduction processing and the recording processing for one song is terminated.

### (Example)

Next, an example of communication between the user and the AV information processing unit A will be described with reference to FIG. 6 in the case that the above described series of the reproduction processing and the recording processing are performed.

As shown in FIG. 6, at first, the user desires to listen to the newest album of a singer A. When he or she pronounces a request RQ1 such that the user desires to listen to the newest album of a singer A to a microphone 1 of the AV information processing unit A, the AV information processing unit A identifies this request RQ1 and obtains the songs included in the corresponding reproduced album from the exterior network 16 by using the download agent 13 or the like. Then, the AV information processing unit A performs output i.e., reproduction processing (refer to steps S1 to S6, S9 and S10 in FIG. 5) to the user by using the above reproduction scenario data 30A as it accumulates them in the AV information recording portion 14.

The user who listens to the reproduced song desires to record the reproduced song in the MD and sends the request RQ2 such that the user desires to record the reproduced song in the MD when the reproduction of the song is terminated (refer to step S7; YES and S8 in FIG. 5). Then, the AV information processing unit A takes over the data from the reproduction scenario data 30A (refer to steps S11 to S14 in FIG. 5) and performs the recording the song in the designated MD (step S16) after the user designates the MD in which the song should be recorded.

In the reproduction processing to be successively performed with respect to the next song, if the request RQ3 such that the next song should be recorded in the MD is performed, a series of recording processing is successively performed in the same way as the above described case.

As described above, according to the embodiment of the AV information processing, the recording processing is performed by shifting a portion of the reproduction scenario data 30A used in the reproduction processing and using the shifted one as the recording scenario data 30B. Therefore, there is no need to newly provide all recording scenario data 30B necessary for performing the recording processing from the outside, so that it becomes possible to simplify treating of the AV information processing unit A and to perform necessary processing user-friendly as the AV information processing unit A.

Alternatively, since the AV information processing unit performs the reproduction processing or the recording processing, respectively, in accordance with a scenario set in advance, even in the case that various processings are performed in accordance with a procedure set in advance, it becomes possible to simplify treating of the AV information processing unit and to perform necessary processing user-friendly as the AV information processing unit A.

Further, since the reproduction processing is performed by using the voice, it is possible to provide a song in a form such that the user can easily identify.

Furthermore, since the request is received from the outside by the voice, it is possible for the user to easily request performing of the reproduction processing or the like by using the voice.

Alternatively, since the AV information is obtained from the outside by using the download agent 13 or the like and the reproduction processing or the like is performed, it is possible to perform necessary processing by using broader range of the AV information.

Alternatively, in the above described embodiment, the case that the data is taken over between the reproduction scenario data 30A and the recording scenario data 30B is explained. However, it may be possible to configure the AV information processing unit A in such a way that the data mutually necessary for the other editorial scenario data 30C and download scenario data 30D is taken over between the other editorial scenario data 30C and the download scenario data 30D to perform respective processings.

Alternatively, in the above described embodiment, a method by the use of the voice as a method for giving and receiving the information between the user and the AV information processing unit A is mainly described. However, other than this, for example, the present invention can be applied in the case of giving and receiving the information by the use of character recognition and the image representation or in the case of giving and receiving the information by the use of a remote controller or the like, the image representation and the voice output.

Further, the program to perform the processing in the above described respective processings is stored in a flexible disk or a hard disk as an information recording medium. Then, this stored program is read out by a general personal computer (which should have a hard disk as the above described AV information recording portion 14 and the AV information data base 15) to be performed. As a result, the personal computer is capable of functioning as the above described AV information processing unit A.

Furthermore, configuring the AV information accumulating device S by an IC (Integrated Circuit) card, in which a CPU and a memory are filled, enables the plural users to share the above respective scenario data due to portability of the IC card.

## Claims

1. An AV information processing unit comprising:
an AV information accumulating device for accumulating AV (Audio Visual) information, which include any one of audio information, video information and data information associated with at least any one of the audio information and the video information;
plural performing devices for performing partial information processing, which is a part of information processing required to be preformed from the outside, by using said accumulated AV information and performing each of said partial information processings, which are different each other, separately; and
a shifting device for shifting at least a portion of utility information from said performing device, which has performed one partial information processing, to said performing device for performing other partial information processing, so that at least a portion of the utility information used to perform said one partial information processing can be used to perform said other partial information processing.

2. The AV information processing unit according to claim 1, wherein said each performing device performs said associated partial information processing, respectively, in accordance with a processing procedure set in advance.

3. The information processing unit according to claim 1 or 2, further comprising an outputting device for outputting an performing result from said entire information processing, which is obtained by performing said each partial information processing by said each performing device to an exterior by using at least any one of a voice and an image.

4. The AV information processing unit according to any one of claims 1 to 3, further comprising a receiving device for receiving said information processing required from the exterior by the voice.

5. The AV information processing unit according to any one of claims 1 to 4, further comprising an obtaining device for obtaining said AV information from the exterior and accumulating it in said AV information accumulating device; wherein said each performing device performs said associated partial information processing by using said AV information.

6. An information recording medium, in which an AV information processing program is recorded so as to be capable of being read by a computer, for making said computer function as:
an AV information accumulating device for accumulating the AV information, which includes any one of audio information, video information and data information associated with at least any one of the audio information and the video information;
plural performing devices for performing partial information processing, which is a part of information processing required to be performed from the outside, by using said accumulated AV information and performing each of said partial information processings, which are different each other, separately; and
a shifting device for shifting at least a portion of utility information from said performing device, which has performed one partial information processing, to said performing device for performing other partial information processing, so that at least a portion of the utility information used to perform said one partial information processing can be used to perform said other partial information processing.

7. The information recording medium according to claim 6, in which said AV information processing program is recorded so as to be capable of being read by a computer, for making said computer functioning as said each performing device function such'that it performs said associated partial information processing, respectively, in accordance with a processing procedure set in advance.

8. The information recording medium according to claim 6 or 7, in which said AV information processing program is recorded so as to be capable of being read by a computer, for further making said computer as an outputting device for outputting an performing result from said entire information processing obtained by performing said each partial information processing by said each performing device to an exterior by using at least any one of voice or an image.

9. The information recording medium according to any one of claims 6 to 8, in which said AV information processing program is recorded so as to be capable of being read by a computer, for further making said computer as a receiving device for receiving said information processing required from the exterior by the voice.

10. The information recording medium according to any one of claims 6 to 9, in which said AV information processing program is recorded so as to be capable of being read by a computer, for further making said computer as an obtaining device for obtaining said AV information form the exterior and accumulating it in said AV information accumulating device and making said computer functioning as said each performing device function such that it performs said associated partial information processing by using said AV information.
